# EUROPEAN PATENT SPECIFICATION

(11) **EP 3 244 522 B1**
(45) Date of publication and mention of the grant of the patent: **20.02.2019**
(21) Application number: 17170042.0
(22) Date of filing: 09.05.2017
(51) Int. Cl.: H02M 1/34, B23K 9/09, H02M 3/142

(54) **ULTRASONIC-FREQUENCY PULSED GMAW WELDING POWER SOURCE DEVICE**
ULTRASCHALLFREQUENZGEPULSTE GMAW-SCHWEISSSTROMQUELLENVORRICHTUNG
DISPOSITIF DE SOURCE DE PUISSANCE DE SOUDAGE GMAW À FRÉQUENCE ULTRASONORE PULSÉE

(30) Priority: 10.05.2016 CN 201610305413
(43) Date of publication of application: 15.11.2017
(73) Proprietor: Beihang University, Beijing 100191 (CN)
(72) Inventor: QI, Bojin, Beijing, Beijing 100191 (CN); WANG, Qiang, Beijing, Beijing 100191 (CN); CONG, Baoqiang, Beijing, Beijing 100191 (CN); ZHANG, Wei, Beijing, Beijing 100191 (CN)
(74) Representative: Bertsch, Florian Oliver

(56) References cited:
- CN-A- 101 272 089
- CN-A- 101 782 630
- JP-A- S54 131 548
- MINGXUAN YANG ET AL: "The effect of pulsed frequency on the plasma jet force with ultra high-frequency pulsed arc welding", WELDING IN THE WORLD, SPRINGER, vol. 59, no. 6, 1 November 2015 (2015-11-01), pages 875-882, XP001596269, ISSN: 0043-2288, DOI: 10.1007/S40194-015-0261-0 [retrieved on 2015-08-08]

## Description

### Field of the Invention

The present disclosure relates to the welding field, and more particularly to an ultrasonic-frequency pulse GMAW welding power source device.

### Description of the Related Art

Pulsed Gas Metal Arc Welding (P-GMAW) may realize spray transfer under a condition that an average welding current is smaller than a critical current, and has a wide current adjustment range. Meanwhile, P-GMAW is widely applied in industrial production due to its advantages of low weld spatter, high production efficiency, good weld penetration, low welding heat input, and being suitable for all-position welding. However, similar to other types of arc welding, P-GMAW has the problems that gas pores are generated easily, weld seam microstructure is coarse, the mechanical properties of joints are seriously degraded as compared with that of base materials, and especially during arc maintenance of pulsed welding, the current is small, the arc is easily interfered and has poor stability, so P-GMAW is limited in actual application.

With the development of ultrasonic technologies and equipment, power ultrasound is increasingly used in the welding field. The introduction of the ultrasonic wave in the arc welding may improve base material melting and metal solidification and crystallization in a molten pool, thereby refining the weld seam microstructure and raising the joint performance. WU Minsheng et al. from Tsinghua University proposed an arc ultrasonic method, in which the ultrasonic is excited by an ultrasonic excitation source in a manner of isolation and coupling during the welding process, so that weld seam grains are refined under arc ultrasonic effects, the stress distribution of the weld seam is improved, and the impact toughness and fatigue life of the weld seam joint are increased. The team led by YANG Chunli in Harbin Institute of Technology implements the hybrid of ultrasonic vibration and welding arc by mechanically coupling an ultrasonic vibration device to a welding gun, and successfully applied it in GTAW and GMAW. Research shows that the ultrasonic-arc hybrid welding method is advantageous in improving the welding efficiency, improving the droplet transfer process, enhancing the welding stability, refining the joint microstructure, reducing pores and the like.

However, the ultrasonic-frequency pulse current excited by an external excitation source has a low change rate of the rising edge and falling edge, resulting in a small amplitude of the pulse current and low effects. When the mechanical coupling of the ultrasonic vibration device and the welding gun is adopted, a special welding gun of a specific structural design is required, and the welding gun has a complex structure and has limited application scenarios.

An example for an ultra-high frequency pulsed gas tungsten arc welding UHFP-GTAW is provided in the research paper XP001596269 with the title "The effect of pulsed frequency on the plasma jet force with ultra high-frequency pulsed arc welding", published online on 8th August 2015, and which is considered as the closest prior art. The total output welding current is the sum of a background current from a full-bridge inverter, a transformer and a rectifier, and a high-frequency current from a half-bridge inverter, a transformer, a rectifier and a pulsed current switching converter including a boost converter.

### SUMMARY OF THE INVENTION

The present disclosure provides an ultrasonic-frequency hybrid pulse GMAW welding power source device, to solve the technical problems in the prior art that the manner of coupling an external excitation source to ultrasonic-frequency pulses leads to a small amplitude of the pulse current and low effects.

The invention is defined by the features of claim 1. The dependent claims recite advantageous embodiments of the invention.

The ultrasonic-frequency hybrid pulse GMAW welding power source device provided by the present disclosure includes a constant voltage source for providing a constant voltage to a BUCK-type main circuit, the BUCK-type main circuit, a constant current source for providing a constant current to an ultrasonic-frequency pulse current switching circuit, and the ultrasonic-frequency pulse current switching circuit, wherein the constant voltage source is connected to the BUCK-type main circuit; the constant current source is connected to the ultrasonic-frequency pulse current switching circuit; the BUCK-type main circuit is in parallel connection to the ultrasonic-frequency pulse current switching circuit.

The BUCK-type main circuit is used for providing a first output current for welding, and the first output current is in the form of a direct current or pulses;
The ultrasonic-frequency pulse current switching circuit is used for providing a second output current for welding, and the second output current is an ultrasonic-frequency pulse current.

Further, the BUCK-type main circuit includes a first power switching transistor, an inductor, and a first diode, wherein the drain of the first power switching transistor is connected to the positive terminal of the constant voltage source, the source of the first power switching transistor is connected to the inductor, the anode of the first diode is connected to the negative terminal of the constant voltage source, and the cathode of the first diode is connected to the source of the first power switching transistor and the inductor.

Further, the ultrasonic-frequency pulse current switching circuit includes a second power switching transistor, a third power switching transistor, and a second diode, wherein the anode of the second diode is connected to the positive terminal of the constant current source, the cathode of the second diode is connected to the current output of the inductor, the drain of the second power switching transistor is connected to the positive terminal of the constant current source, the source of the second power switching transistor is connected to the negative terminal of the constant current source, the source of the third power switching transistor is connected to the negative terminal of the constant current source, and the drain of the third power switching transistor is connected to the negative terminal of the constant voltage source.

Further, the ultrasonic-frequency pulse current switching circuit further includes a third diode and a third capacitor, wherein the anode of the third diode is connected to the positive terminal of the constant current source, the cathode of the third diode is connected to a spike voltage absorbing circuit, the spike voltage absorbing circuit is connected to the negative terminal of the constant current source, one end of the third capacitor is connected to the cathode of the third diode, and the other end of the third capacitor is connected to the negative terminal of the constant current source.

The spike voltage absorbing circuit is used for absorbing a spike voltage generated by the ultrasonic-frequency pulse current switching circuit.

Further, the second power switching transistor and the third power switching transistor are alternately turned on and off, the frequency of the driving signals of the second power switching transistor and the third power switching transistor is between 20 kHz and 100 kHz, the adjustment range of the duty cycle is from 0 to 100%, the amplitude of the ultrasonic-frequency pulse current is between 0 and 100 A, and the change rate of the current rising edge and falling edge is above 50 A/µs.

Further, the frequency of the driving signals and the duty cycles of the second power switching transistor and the third power switching transistor are set by a digital signal processor.

Further, the total output current of the welding power source of the device is superposition of the first output current and the second output current, which is a current output from the second diode.

Further, the device also includes a first capacitor and a second capacitor, wherein the first capacitor is an electrolytic capacitor, the second capacitor is a high-frequency capacitor, and the first capacitor and the second capacitor are in parallel connection to the output end of the constant voltage source.

Further, the device also includes a fourth capacitor and a fourth diode, wherein one end of the fourth capacitor is connected to the negative terminal of the constant current source, the other end of the fourth capacitor is connected to the cathode of the fourth diode, the anode of the fourth diode is connected to the negative terminal of the constant voltage source, and the cathode of the fourth diode is also connected to the cathode of the third diode.

The ultrasonic-frequency hybrid pulse GMAW welding power source device provided by the present disclosure superposes the ultrasonic-frequency pulse current generated by the ultrasonic-frequency pulse current switching circuit and the current that is in the form of a direct current or pulses and output by the BUCK-type main circuit, to improve the performance of the droplet transfer in conventional direct-current or pulse GMAW, so that arc energy is concentrated and the stiffness is increased, and during welding, the flowing of the molten pool is facilitated, gas pores are reduced, grains are refined, the mechanical properties of welding joints are improved, and the introduction of the ultrasonic-frequency pulse current may greatly improve arc stability and reduce the influence of the arc blow.

### BRIEF DESCRIPTION OF THE DRAWINGS

More detailed descriptions of the present disclosure are given below based on embodiments with reference to the accompanying drawings. Wherein:
FIG. 1 is a schematic circuit diagram of an ultrasonic-frequency hybrid pulse GMAW welding power source device provided by the present disclosure;
FIG. 2a to FIG. 2d are waveform diagrams of current *I_{A}*, *I_{B}*, *I_{C}*, *I_{D}* in FIG. 1 when a continuous ultrasonic-frequency pulse current is superposed on a conventional direct-current GMAW;
FIG. 3a to FIG. 3d are waveform diagrams of current *I_{A}, I_{B}*, *I_{C}*, *I_{D}* in FIG. 1 when an ultrasonic-frequency pulse current is superposed on a conventional pulse GMAW background current;
FIG. 4a to FIG. 4d are waveform diagrams of current *I_{A}, I_{B}*, *I_{C}*, *I_{D}* in FIG. 1 when an ultrasonic-frequency pulse current is superposed on a conventional pulse GMAW peak current;
FIG. 5a to FIG. 5d are waveform diagrams of current *I_{A}, I_{B}*, *I_{C}*, *I_{D}* in FIG. 1 when an ultrasonic-frequency pulse current is superposed on a conventional pulse GMAW background and peak current.

In the accompanying drawings, the same parts are marked by the same reference signs. The accompanying drawings are not depicted to scale.

### DETAILED DESCRIPTION OF THE PREFERRED EMBODIMENTS

The present disclosure is further described below with reference to the accompanying drawings.

### Embodiment 1

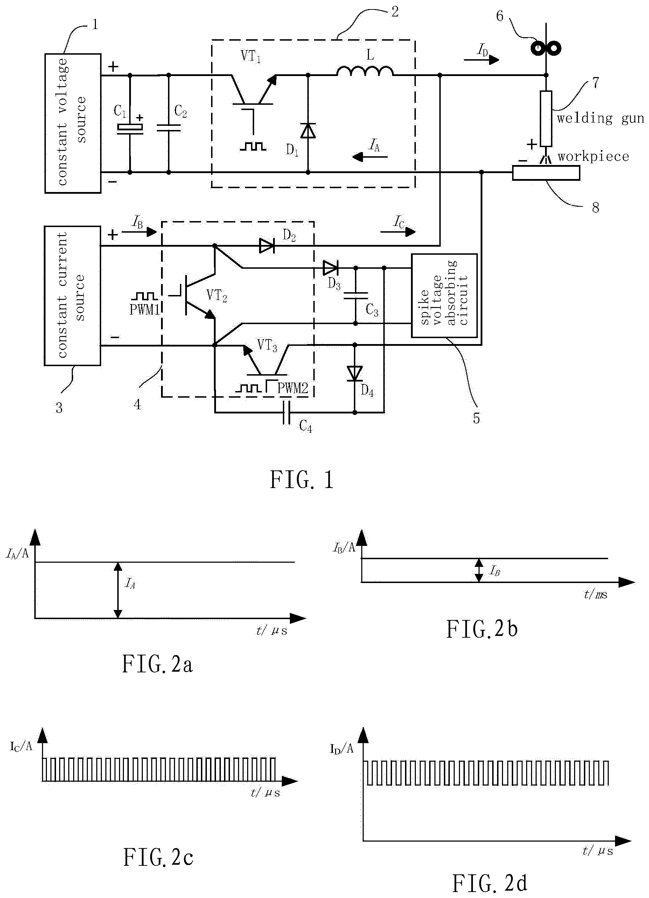

FIG. 1 is a schematic circuit diagram of an ultrasonic-frequency hybrid pulse GMAW welding power source device provided by the present disclosure. As shown in FIG. 1, the present embodiment provides an ultrasonic-frequency hybrid pulse GMAW welding power source device, including a constant voltage source 1 for providing a constant voltage to a BUCK-type main circuit 2, the BUCK-type main circuit 2, a constant current source 3 for providing a constant current to an ultrasonic-frequency pulse current switching circuit 4, and the ultrasonic-frequency pulse current switching circuit 4, where the constant voltage source 1 is connected to the BUCK-type main circuit 2; the constant current source 3 is connected to the ultrasonic-frequency pulse current switching circuit 4; the BUCK-type main circuit 2 is in parallel connection to the ultrasonic-frequency pulse current switching circuit 4; the BUCK-type main circuit 2 is used for providing a first output current for welding, which is in the form of a direct current or pulses; and the ultrasonic-frequency pulse current switching circuit 4 is used for providing a second output current for welding, which is an ultrasonic-frequency pulse current.

Specifically, gas metal arc welding (GMAW) is a welding method in which an electric arc between a welding wire and workpiece is used to melt a base material and the continuously fed welding wire under gas shielding, to form a molten pool and a weld seam. The ultrasonic-frequency hybrid pulse GMAW welding power source device provided by the present embodiment is used for providing a power source for a welding process, and as shown in FIG. 1, an output end of the device is connected to a welding gun 7 and a workpiece 8 respectively, so as to provide a power source for the welding process.

The ultrasonic-frequency hybrid pulse GMAW welding power source device provided by the present embodiment superposes the second output current output by the ultrasonic-frequency pulse current switching circuit 4, that is, the ultrasonic-frequency pulse current, on the first output current output by the BUCK-type main circuit 2, to improve droplet transfer in conventional direct-current or pulse GMAW, so that arc energy is concentrated and the stiffness is increased, and during welding, the flowing of the molten pool is facilitated, gas pores are reduced, grains are refined, the mechanical properties of welding joints are improved, and the introduction of the ultrasonic-frequency pulse current may greatly improve arc stability and reduce the influence of arc blow.

Further, the constant current source 3 outputs a direct current, and the adjustment range of the direct current is from 0 to 100 A, with the maximum value of 100A. The output voltage range of the constant voltage source 1 is from 70 V to 80 V.

Further, said device also includes a first capacitor *C₁* and a second capacitor *C₂*, where the first capacitor *C₁* is an electrolytic capacitor, the second capacitor *C₂* is a high-frequency capacitor, and the first capacitor *C₁* and the second capacitor *C₂* are in parallel connection to an output end of the constant voltage source.

### Embodiment 2

The present embodiment provides supplementary description based on the above embodiment.

As shown in FIG. 1, the present embodiment provides an ultrasonic-frequency hybrid pulse GMAW welding power source device, where the BUCK-type main circuit 2 includes a first power switching transistor *VT₁,* an inductor L, and a first diode *D₁*. The drain of the first power switching transistor *VT₁* is connected to the positive terminal of the constant voltage source 1, the source of the first power switching transistor *VT₁* is connected to the inductor L, the anode of the first diode *D₁* is connected to the negative terminal of the constant voltage source 1, and the cathode of the first diode *D₁* is connected to the source of the first power switching transistor *VT₁* and the inductor L.

Specifically, the first output current *I_{A}* provided by the BUCK-type main circuit 2 is in the form of a direct current or pulses, and the maximum output current may reach 500 A. The first power switching transistor *VT₁* is an insulated gate bipolar transistor.

Further, the ultrasonic-frequency pulse current switching circuit 4 includes a second power switching transistor *VT₂,* a third power switching transistor *VT₃,* and a second diode *D₂*. The anode of the second diode *D₂* is connected to the positive terminal of the constant current source 3, the cathode of the second diode *D₂* is connected to the current output end of the inductor L, the drain of the second power switching transistor *VT₂* is connected to the positive terminal of the constant current source 3, the source of the second power switching transistor *VT₂* is connected to the negative terminal of the constant current source 3, the source of the third power switching transistor *VT₃* is connected to the negative terminal of the constant current source 3, and the drain of the third power switching transistor *VT₃* is connected to the negative terminal of the constant voltage source 1.

Further, said device also includes a third diode *D₃* and a third capacitor *C₃*, wherein the anode of the third diode *D₃* is connected to the positive terminal of the constant current source 3, the cathode of the third diode *D₃* is connected to a spike voltage absorbing circuit 5, the spike voltage absorbing circuit 5 is connected to the negative terminal of the constant current source 3, one end of the third capacitor *C₃* is connected to the cathode of the third diode *D₃*, and the other end of the third capacitor *C₃* is connected to the negative terminal of the constant current source 3; the spike voltage absorbing circuit 5 is used for absorbing a spike voltage generated by the ultrasonic-frequency pulse current switching circuit 4.

The second power switching transistor *VT₂* and the third power switching transistor *VT₃* are alternately turned on and off, the frequency of the driving signals of the second power switching transistor *VT₂* and the third power switching transistor *VT₃* is between 20 kHz and 100 kHz, the adjustment range of the duty cycle is from 0 to 100%, the amplitude of the ultrasonic-frequency pulse current is between 0 and 100 A, and the change rate of the current rising edge and falling edge is above 50 A/µs.

Specifically, the second power switching transistor *VT₂* and the third power switching transistor *VT₃* are alternately turned on and off, the driving signal frequency thereof is between 20 kHz and 100 kHz, and the adjustment range of the duty cycle is from 0 to 100%.The amplitude of the ultrasonic-frequency pulse current output by the ultrasonic-frequency pulse current switching circuit 4 is the same as the amplitude of the current output by the constant current source 3.A relatively large spike voltage is generated when the second power switching transistor *VT₂* and the third power switching transistor *VT₃* are rapidly turned on and off, and the spike voltage absorbing circuit 5 absorbs the spike voltage, thereby achieving an effect of protecting the second power switching transistor *VT₂* and the third power switching transistor *VT₃.*

Further, said device also includes a fourth capacitor *C₄* and a fourth diode *D₄*, wherein one end of the fourth capacitor *C₄* is connected to the negative terminal of the constant current source, the other end of the fourth capacitor *C₄* is connected to the cathode of the fourth diode *D₄*, the anode of the fourth diode *D₄* is connected to the negative terminal of the constant voltage source, and the cathode of the fourth diode *D₄* is also connected to the cathode of the third diode *D₃*.

Further, the frequency of the driving signals and the duty cycle of the second power switching transistor *VT₂* and the third power switching transistor *VT₃* are set by a digital signal processor (not shown).

The total output current of the welding power source of the device is superposition of the first output current *I_{A}* and the second output current /c, which is an output current from the second diode *D₂*.

Specifically, as shown in FIG. 1, a wire feeder 6 is in a constant-speed wire feeding mode, and the adjustment range of the wire feeding speed is from 2 to 20 m/min. The total output current of the welding power source is superposition of the first output current *I_{A}* and the second output current /c; given signals of the first output current *I_{A}* and the second output current *I_{C}* as well as the frequency of the driving signals and the duty cycle of the second power switching transistor *VT₂* and the third power switching transistor *VT₃* are synchronously set by the digital signal processor, thereby achieving various output forms of the welding current. For example, conventional direct-current GMAW is superposed with an ultrasonic-frequency pulse current, a pulse GMAW background current is superposed with an ultrasonic-frequency pulse current, a pulse GMAW peak current is superposed with an ultrasonic-frequency pulse current, and a pulse GMAW background and peak current are both superposed with an ultrasonic-frequency pulse current.

The ultrasonic-frequency hybrid pulse GMAW welding power source device provided by the present embodiment improves droplet transfer in conventional direct-current or pulse GMAW, so that arc energy is concentrated, the stiffness is increased, the flowing of the molten pool is facilitated, gas pores are reduced, grains are refined, the mechanical properties of welding joints are improved, and in pulsed welding, the introduction of the ultrasonic-frequency pulse current during the background current duration may greatly improve arc stability and reduce the influence of arc blow. The amplitude of the ultrasonic-frequency pulse current reaches up to 100 A, and the ultrasonic effect is greater as compared with the manner of coupling an external excitation source. The welding power source device of the present disclosure does not require a welding gun with a specific structure, and is more generally used. The DSP is used to realize digital control and synchronous setting of the given current signals and the ultrasonic-frequency pulse driving signals, and therefore various welding current waveforms can be output.

Specific embodiments are given below for detailed description.

As shown in FIG. 2a to FIG. 2d, they are schematic waveform diagrams of the current *I_{A}, I_{B}*, *I_{C}*, *I_{D}* in FIG. 1 when a continuous ultrasonic-frequency pulse current is superposed on conventional direct-current GMAW. The current *I_{A}* is a direct-current output, and the adjustment range of the current is from 5 to 500 A; the current *I_{B}* is a direct-current output, and the adjustment range of the current is from 0 to 100 A; the current *I_{C}* is an ultrasonic-frequency pulse current, when *VT₂* is turned on and *VT₃* is turned off, the current *I_{C}* is 0, and when *VT₂* is turned off and *VT₃* is turned on, the value of the current *I_{C}* is equal to that of the current *I_{B}*, and the switching frequency and duty cycle of *VT₂, VT₃* are the frequency and duty cycle of the current *I_{C}* which are set by the DSP. The current *I_{D}* is a sum of the current *I_{A}* and the current *I_{C}*.

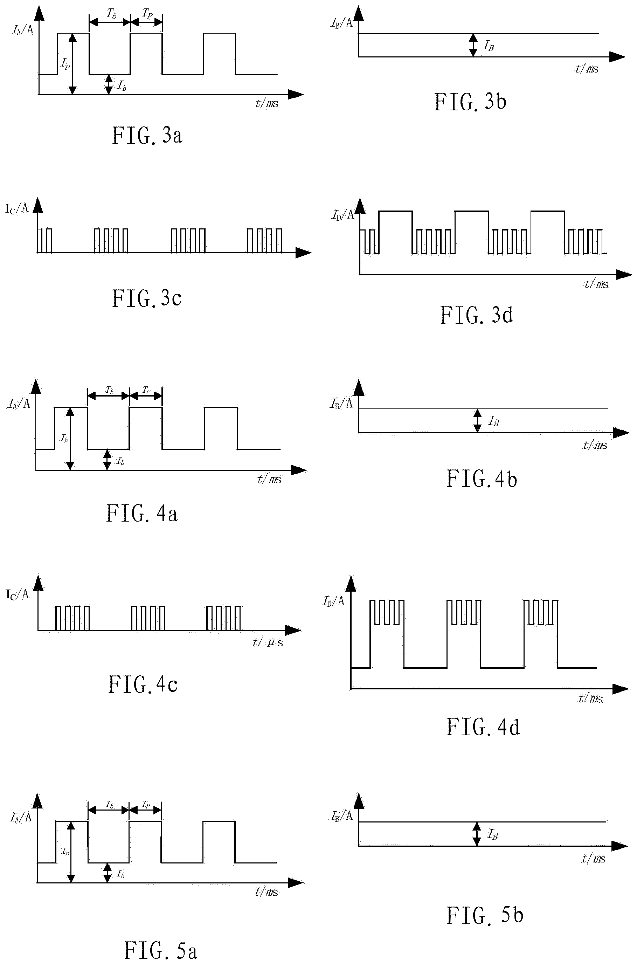

As shown in FIG. 3a to FIG. 3d, they are schematic waveform diagrams of the current *I_{A}, I_{B}*, *I_{C}*, *I_{D}* in FIG. 1 when an ultrasonic-frequency pulse current is superposed on a conventional pulse GMAW background current. The first output current *I_{A}* is pulse output, *I_{b}* is a pulse background current, *Iₚ* is a peak current, *T_{b}* is a background time, *Tₚ* is a peak time, the adjustment range of *Tₚ* is from 0.1 to 9.9 ms, and the adjustment range of Tb is from 0.1 to 300.0 ms. In welding, during the background time *T_{b}, VT₂* and *VT₃* are alternately turned on and off according to specified frequency and duty cycle, and the current *I_{C}* is output as an ultrasonic-frequency pulse current; during the peak time *Tₚ, VT₂* is turned on, *VT₃* is turned off, and the current *I_{C}* is 0; the current *I_{D}* is a sum of the current *I_{A}* and the current *I_{C}*.

As shown in FIG. 4a to FIG. 4d, they are schematic waveform diagrams of the current *I_{A}*, *I_{B}*, *I_{C}*, *I_{D}* in FIG. 1 when an ultrasonic-frequency pulse current is superposed on a conventional pulse GMAW peak current. The current *I_{A}* is a pulse output, *I_{b}* is a background current, *Iₚ* is a peak current, *T_{b}* is a background time, *Tₚ* is a peak time, the adjustment range of *Tₚ* is from 0.1 to 9.9 ms, and the adjustment range of *T_{b}* is from 0.1 to 300.0 ms; the current *I_{B}* is a direct-current output; in welding, during the background time *T_{b}*, *VT₂* is turned on, *VT₃* is turned off, and the current *I_{C}* is 0; during the peak time *Tₚ*, the switching transistors *VT₂* and *VT₃* are alternately turned on and off according to specified frequency and duty cycle, and the current *I_{C}* is output as an ultrasonic-frequency pulse current; the current *I_{D}* is a sum of the current *I_{A}* and the current *I_{C}*.

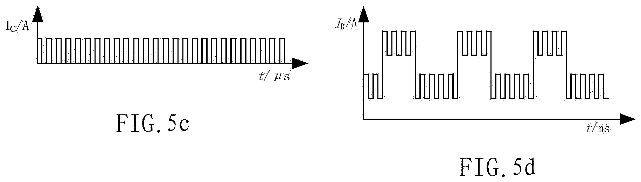

As shown in FIG. 5a to FIG. 5d, they are schematic waveform diagrams of the current *I_{A}*, *I_{B}*, *I_{C}*, *I_{D}* in FIG. 1 when an ultrasonic-frequency pulse current is superposed on a conventional pulse GMAW background and peak current. The current *I_{A}* is a pulse output, *I_{b}* is a background current, *Iₚ* is a peak current, *T_{b}* is a background time, *Tₚ* is a peak time, the adjustment range of *Tₚ* is from 0.1 to 9.9 ms, and the adjustment range of *T_{b}* is from 0.1 to 300.0 ms; the current *I_{B}* is a direct-current output; in welding, *VT₂* and *VT₃* are alternately turned on and off according to specified frequency and duty cycle, and the current *I_{C}* is output as a continuous ultrasonic-frequency pulse current; the current *I_{D}* is a sum of the current *I_{A}* and the current *I_{C}*.

Although the present disclosure is described with reference to preferred embodiments, various improvements can be made and equivalent parts can be used for replacement without departing from the scope of the present disclosure as defined in the appended claims. Especially, the technical features mentioned in the embodiments can be combined in any way as long as no structural conflicts are caused, and shall cover all the technical solutions falling within the scope of the appended claims.

## Claims

1. An ultrasonic-frequency hybrid pulse GMAW welding power source device, comprising a constant voltage source (1) for providing a constant voltage to a BUCK-type main circuit (2), the BUCK-type main circuit (2), a constant current source (3) for providing a constant current to an ultrasonic-frequency pulse current switching circuit (4), and the ultrasonic-frequency pulse current switching circuit (4), wherein the constant voltage source (1) is connected to the BUCK-type main circuit (2); the constant current source (3) is connected to the ultrasonic-frequency pulse current switching circuit (4); the BUCK-type main circuit (2) is in parallel connection to the ultrasonic-frequency pulse current switching circuit (4);
the BUCK-type main circuit (2) is used for providing a first output current (I_{A}) for welding, which is in the form of a direct current or pulses;
the ultrasonic-frequency pulse current switching circuit (4) is used for providing a second output current (Ic) for welding, which is an ultrasonic-frequency pulse current, wherein the BUCK-type main circuit (2) is configured to output pulses as the first output current; and the ultrasonic-frequency pulse current switching circuit (4) is configured to provide the second output current (I_{C}) so that the ultrasonic-frequency pulse current is superposed with both a background current (I_{b}) and a peak current (Iₚ) of the first output current (I_{A}).

2. The ultrasonic-frequency hybrid pulse GMAW welding power source device according to claim 1, **characterized in that** the BUCK-type main circuit (2) comprises a first power switching transistor (VT₁), an inductor (L), and a first diode (D₁), the drain of the first power switching transistor (VT₁) is connected to a positive terminal of the constant voltage source (1), the source of the first power switching transistor (VT₁) is connected to the inductor (L), the anode of the first diode (D₁) is connected to a negative terminal of the constant voltage source (1), and the cathode of the first diode (D₁) is connected to the source of the first power switching transistor (VT₁) and the inductor (L).

3. The ultrasonic-frequency hybrid pulse GMAW welding power source device according to claim 1 or 2, **characterized in that** the ultrasonic-frequency pulse current switching circuit (4) comprises a second power switching transistor (VT₂), a third power switching transistor (VT₃), and a second diode (D₂), the anode of the second diode (D₂) is connected to a positive terminal of the constant current source (3), the cathode of the second diode (D₂) is connected to the current output end of the inductor (L), the drain of the second power switching transistor (VT₂) is connected to the positive terminal of the constant current source (3), the source of the second power switching transistor (VT₂) is connected to the negative terminal of the constant current source (3), the source of the third power switching transistor (VT₃) is connected to a negative terminal of the constant current source (3), and the drain of the third power switching transistor (VT₃) is connected to the negative terminal of the constant voltage source (1).

4. The ultrasonic-frequency hybrid pulse GMAW welding power source device according to any one of claims 1-3, **characterized by** further comprising a third diode (D₃), a third capacitor (C₃), and a spike voltage absorbing circuit (5) for absorbing a spike voltage generated by the ultrasonic-frequency pulse current switching circuit (4), wherein the anode of the third diode (D₃) is connected to the positive terminal of the constant current source (3), the cathode of the third diode (D₃) is connected to the spike voltage absorbing circuit (5), the spike voltage absorbing circuit (5) is connected to the negative terminal of the constant current source (3), one end of the third capacitor (C₃) is connected to the cathode of the third diode (D₃), and the other end of the third capacitor (C₃) is connected to the negative terminal of the constant current source (3).

5. The ultrasonic-frequency hybrid pulse GMAW welding power source device according to claim 3 or 4, **characterized in that** the second power switching transistor (VT₂) and the third power switching transistor (VT₃) are alternately turned on and off, the frequency of driving signals of the second power switching transistor (VT₂) and the third power switching transistor (VT₃) is between 20 kHz and 100 kHz, adjustment range of the duty cycle is from 0 to 100%, the current amplitude of the ultrasonic-frequency pulse current is between 0 and 100 A, and the change rate of a rising edge and a falling edge of the ultrasonic-frequency pulse current is above 50 A/µs.

6. The ultrasonic-frequency hybrid pulse GMAW welding power source device according to any one of claims 3-5, **characterized in that** the frequency of the driving signals and the duty cycle of the second power switching transistor and the third power switching transistor are set by a digital signal processor.

7. The ultrasonic-frequency hybrid pulse GMAW welding power source device according to any one of claims 3-6, **characterized in that** a total output current (I_{D}) of the welding power source device is a superposition of the first output current (I_{A}) and the second output current (I_{C}) that is a current output from the second diode (D₂).

8. The ultrasonic-frequency hybrid pulse GMAW welding power source device according to any one of claims 1-7, **characterized by** further comprising a first capacitor (C₁) and a second capacitor (C₂), wherein the first capacitor (C₁) is an electrolytic capacitor, the second capacitor (C₂) is a high-frequency capacitor, and the first capacitor (C₁) and the second capacitor (C₂) are in parallel connection to the output end of the constant voltage source (1).

9. The ultrasonic-frequency hybrid pulse GMAW welding power source device according to any one of claims 4-8, **characterized by** further comprising a fourth capacitor (C₄) and a fourth diode (D₄), wherein one end of the fourth capacitor (C₄) is connected to the negative terminal of the constant current source (3), the other end of the fourth capacitor (C₄) is connected to the cathode of the fourth diode (D₄), the anode of the fourth diode (D₄) is connected to the negative terminal of the constant voltage source (1), and the cathode of the fourth diode (D₄) is also connected to the cathode of the third diode (D₃).

## Patentansprüche

1. Ultraschallfrequenz-Hybridimpuls-GMAW-Schweißstromquellenvorrichtung, umfassend eine Konstantspannungsquelle (1) zum Bereitstellen einer konstanten Spannung an einen BUCK-Hauptkreis (2), den BUCK-Hauptkreis (2), eine Konstantstromquelle (3) zum Bereitstellen eines konstanten Stroms an einen Ultraschallfrequenz-Impulsstrom-Schaltkreis (4) und den Ultraschallfrequenz-Impulsstrom-Schaltkreis (4), wobei die Konstantstromquelle (1) mit dem BUCK-Hauptkreis (2) verbunden ist; die Konstantstromquelle (3) mit dem Ultraschallfrequenz-Impulsstrom-Schaltkreis (4) verbunden ist; der BUCK-Hauptkreis (2) parallel mit dem Ultraschallfrequenz-Impulsstrom-Schaltkreis (4) verbunden ist;
der BUCK-Hauptkreis (2) zum Bereitstellen eines ersten Ausgangsstroms (I_{A}) zum Schweißen verwendet wird, welcher in Form eines Gleichstroms oder von Impulsen vorliegt;
der Ultraschallfrequenz-Impulsstrom-Schaltkreis (4) zum Bereitstellen eines zweiten Ausgangsstroms (I_{C}) zum Schweißen verwendet wird, welcher ein Ultraschallfrequenz-Impulsstrom ist, wobei der BUCK-Hauptkreis (2) zum Ausgeben von Impulsen als erster Ausgangsstrom konfiguriert ist; und die Ultraschallfrequenz-Impulsstrom-Schaltkreis (4) zum Bereitstellen des zweiten Ausgangsstroms (I_{C}) konfiguriert ist, so dass der Ultraschallfrequenz-Impulsstrom sowohl mit einem Hintergrundstrom (I_{b}) als auch mit einem Spitzenstrom (I_{b}) des ersten Ausgangsstroms (I_{A}) überlagert wird.

2. Ultraschallfrequenz-Hybridimpuls-GMAW-Schweißstromquellenvorrichtung nach Anspruch 1, **dadurch gekennzeichnet, dass** der BUCK-Hauptkreis (2) einen ersten Leistungsschalttransistor (VT₁), einen Induktor (L) und eine erste Diode (D₁) umfasst, wobei der Drain-Anschluss des ersten Leistungsschalttransistors (VT₁) an einen positiven Anschluss der Konstantspannungsquelle (1) angeschlossen ist, der Source-Anschluss des ersten Leistungsschalttransistors (VT₁) mit dem Induktor (L) verbunden ist, die Anode der ersten Diode (D₁) mit einem Minuspol der Konstantspannungsquelle (1) verbunden ist, und die Kathode der ersten Diode (D₁) mit dem Source-Anschluss des ersten Leistungsschalttransistors (VT₁) und dem Induktor (L) verbunden ist.

3. Ultraschallfrequenz-Hybridimpuls-GMAW-Schweißstromquellenvorrichtung nach Anspruch 1 oder 2, **dadurch gekennzeichnet, dass** der Ultraschallfrequenz-Impulsstrom-Schaltkreis (4) einen zweiten Leistungsschalttransistor (VT₂), einen dritten Leistungsschalttransistor (VT₃) und eine zweite Diode (D₂) umfasst, die Anode der zweiten Diode (D₂) mit einem positiven Anschluss der Konstantstromquelle (3) verbunden ist, die Kathode der zweiten Diode (D₂) mit dem Stromausgangsende des Induktors (L) verbunden ist, der Drain-Anschluss des zweiten Leistungsschalttransistors (VT₂) mit dem Pluspol der Konstantstromquelle (3) verbunden ist, der Source-Anschluss des zweiten Leistungsschalttransistors (VT₂) mit dem Minuspol der Konstantstromquelle (3) verbunden ist, der Source-Anschluss des dritten Leistungsschalttransistors (VT₃) mit einem Minuspol der Konstantstromquelle (3) verbunden ist, und der Drain-Anschluss des dritten Leistungsschalttransistors (VT₃) mit dem Minuspol der Konstantspannungsquelle (1) verbunden ist.

4. Ultraschallfrequenz-Hybridimpuls-GMAW-Schweißstromquellenvorrichtung nach einem der Ansprüche 1-3, **dadurch gekennzeichnet, dass** sie weiter eine dritte Diode (D₃), einen dritten Kondensator (C₃) und eine Spitzenspannungsabsorptionsschaltung (5) zum Absorbieren einer von der Ultraschallfrequenz-Impulsstromumschaltung (4) erzeugten Spitzenspannung umfasst, wobei die Anode der dritten Diode (D₃) mit dem positiven Anschluss der Konstantstromquelle (3) verbunden ist, die Kathode der dritten Diode (D₃) mit der Spitzenspannungsabsorptionsschaltung (5) verbunden ist, die Spitzenspannungsabsorptionsschaltung (5) mit dem Minuspol der Konstantstromquelle (3) verbunden ist, ein Ende des dritten Kondensators (C₃) mit der Kathode der dritten Diode (D₃) verbunden ist und das andere Ende des dritten Kondensators (C₃) mit dem Minuspol der Konstantstromquelle (3) verbunden ist.

5. Ultraschallfrequenz-Hybridimpuls-GMAW-Schweißstromquellenvorrichtung nach Anspruch 3 oder 4, **dadurch gekennzeichnet, dass** der zweite Leistungsschalttransistor (VT₂) und der dritte Leistungsschalttransistor (VT₃) abwechselnd ein- und ausgeschaltet sind, die Frequenz der Steuersignale des zweiten Leistungsschalttransistors (VT₂) und des dritten Leistungsschalttransistors (VT₃) zwischen 20 kHz und 100 kHz liegt, der Einstellbereich des Duty Cycle zwischen 0 und 100% liegt, die Stromamplitude des Ultraschallfrequenz-Impulsstroms zwischen 0 und 100 A liegt, und die Änderungsrate einer steigenden Flanke und einer fallenden Flanke des Ultraschallfrequenz-Impulsstroms über 50 A/µs liegt.

6. Ultraschallfrequenz-Hybridimpuls-GMAW-Schweißstromquellenvorrichtung nach einem der Ansprüche 3-5, **dadurch gekennzeichnet, dass** die Frequenz der Antriebssignale und der Duty Cycle des zweiten Leistungsschalttransistors und des dritten Leistungsschalttransistors durch einen digitalen Signalprozessor eingestellt werden.

7. Ultraschallfrequenz-Hybridimpuls-GMAW-Schweißstromquellenvorrichtung nach einem der Ansprüche 3-6, **dadurch gekennzeichnet, dass** ein Gesamtausgangsstrom (I_{D}) der Schweißstromquellenvorrichtung eine Überlagerung des ersten Ausgangsstroms (I_{A}) und des zweiten Ausgangsstroms (I_{C}) ist, welcher ein Ausgangsstrom der zweiten Diode (D₂) ist.

8. Ultraschallfrequenz-Hybridimpuls-GMAW-Schweißstromquellenvorrichtung nach einem der Ansprüche 1-7, **dadurch gekennzeichnet, dass** sie weiter einen ersten Kondensator (C₁) und einen zweiten Kondensator (C₂) umfasst, wobei der erste Kondensator (C₁) ein Elektrolytkondensator ist, der zweite Kondensator (C₂) ein Hochfrequenzkondensator ist, und der erste Kondensator (C₁) und der zweite Kondensator (C₂) parallel mit dem Ausgangsende der Konstantspannungsquelle (1) verbunden sind.

9. Ultraschallfrequenz-Hybridimpuls-GMAW-Schweißstromquellenvorrichtung nach einem der Ansprüche 4-8, **dadurch gekennzeichnet, dass** sie weiter einen vierten Kondensator (C₄) und eine vierte Diode (D₄) umfasst, wobei ein Ende des vierten Kondensators (C₄) mit dem negativen Anschluss der Konstantstromquelle (3) verbunden ist, das andere Ende des vierten Kondensators (C₄) mit der Kathode der vierten Diode (D₄) verbunden ist, die Anode der vierten Diode (D₄) mit dem negativen Anschluss der Konstantspannungsquelle (1) verbunden ist, und die Kathode der vierten Diode (D₄) ebenfalls mit der Kathode der dritten Diode (D₃) verbunden ist.

## Revendications

1. Dispositif de source de puissance impulsionnelle hybride à fréquence ultrasonore pour le soudage GMAW, comprenant une source de tension constante (1) destinée à fournir une tension constante à un circuit principal du type abaisseur de tension (2), le circuit principal du type abaisseur de tension (2), une source de courant constant (3) destinée à fournir un courant constant à un circuit de commutation de courant impulsionnel à fréquence ultrasonore (4), et le circuit de commutation de courant impulsionnel à fréquence ultrasonore (4), dans lequel la source de tension constante (1) est reliée au circuit principal du type abaisseur de tension (2) ; la source de courant constant (3) est reliée au circuit de commutation de courant impulsionnel à fréquence ultrasonore (4) ; le circuit principal du type abaisseur de tension (2) est en liaison parallèle avec le circuit de commutation de courant impulsionnel à fréquence ultrasonore (4) ;
le circuit principal du type abaisseur de tension (2) est utilisé pour fournir un premier courant de sortie (I_{A}) pour le soudage, qui est sous la forme d'un courant continu ou d'impulsions ;
le circuit de commutation de courant impulsionnel à fréquence ultrasonore (4) est utilisé pour fournir un second courant de sortie (I_{C}) pour le soudage, qui est un courant impulsionnel à fréquence ultrasonore, dans lequel le circuit principal du type abaisseur de tension (2) est configuré pour sortir des impulsions en tant que premier courant de sortie ; et le circuit de commutation de courant impulsionnel à fréquence ultrasonore (4) est configuré pour fournir le second courant de sortie (I_{C}) de sorte que le courant impulsionnel à fréquence ultrasonore se superpose à la fois à un courant d'arrière-plan (I_{b}) et à un courant de crête (I_{b}) du premier courant de sortie (I_{A}).

2. Dispositif de source de puissance impulsionnelle hybride à fréquence ultrasonore pour le soudage GMAW selon la revendication 1, **caractérisé en ce que** le circuit principal du type abaisseur de tension (2) comprend un premier transistor de commutation de puissance (VT₁), une inductance (L) et une première diode (D₁), le drain du premier transistor de commutation de puissance (VT₁) est relié à une borne positive de la source de tension constante (1), la source du premier transistor de commutation de puissance (VT₁) est reliée à l'inductance (L), l'anode de la première diode (D₁) est reliée à une borne négative de la source de tension constante (1), et la cathode de la première diode (D₁) est reliée à la source du premier transistor de commutation de puissance (VT₁) et à l'inductance (L).

3. Dispositif de source de puissance impulsionnelle hybride à fréquence ultrasonore pour le soudage GMAW selon la revendication 1 ou 2, **caractérisé en ce que** le circuit de commutation de courant impulsionnel à fréquence ultrasonore (4) comprend un deuxième transistor de commutation de puissance (VT₂), un troisième transistor de commutation de puissance (VT₃) et une deuxième diode (D₂), l'anode de la deuxième diode (D₂) est reliée à une borne positive de la source de courant constant (3), la cathode de la deuxième diode (D₂) est reliée à l'extrémité de sortie de courant de l'inductance (L), le drain du deuxième transistor de commutation de puissance (VT₂) est relié à la borne positive de la source de courant constant (3), la source du deuxième transistor de commutation de puissance (VT₂) est reliée à la borne négative de la source de courant constant (3), la source du troisième transistor de commutation de puissance (VT₃) est reliée à une borne négative de la source de courant constant (3), et le drain du troisième transistor de commutation de puissance (VT₃) est relié à la borne négative de la source de tension constante (1).

4. Dispositif de source de puissance impulsionnelle hybride à fréquence ultrasonore pour le soudage GMAW selon l'une quelconque des revendications 1 à 3, **caractérisé en ce qu'**il comprend en outre une troisième diode (D₃), un troisième condensateur (C₃) et un circuit d'absorption de pics de tension (5) destiné à absorber un pic de tension généré par le circuit de commutation de courant impulsionnel à fréquence ultrasonore (4), dans lequel l'anode de la troisième diode (D₃) est reliée à la borne positive de la source de courant constant (3), la cathode de la troisième diode (D₃) est reliée au circuit d'absorption de pics de tension (5), le circuit d'absorption de pics de tension (5) est relié à la borne négative de la source de courant constant (3), une extrémité particulière du troisième condensateur (C₃) est reliée à la cathode de la troisième diode (D₃) et l'autre extrémité du troisième condensateur (C₃) est reliée à la borne négative de la source de courant constant (3).

5. Dispositif de source de puissance impulsionnelle hybride à fréquence ultrasonore pour le soudage GMAW selon la revendication 3 ou 4, **caractérisé en ce que** le deuxième transistor de commutation de puissance (VT₂) et le troisième transistor de commutation de puissance (VT₃) sont allumés et éteints de façon alternée, la fréquence de signaux d'attaque du deuxième transistor de commutation de puissance (VT₂) et du troisième transistor de commutation de puissance (VT₃) est comprise entre 20 kHz et 100 kHz, la plage de réglage du cycle de fonctionnement va de 0 à 100 %, l'amplitude de courant du courant impulsionnel à fréquence ultrasonore est comprise entre 0 et 100 A, et la vitesse de variation d'un front montant et d'un front descendant du courant impulsionnel à fréquence ultrasonore est supérieure à 50 A/µs.

6. Dispositif de source de puissance impulsionnelle hybride à fréquence ultrasonore pour le soudage GMAW selon l'une quelconque des revendications 3 à 5, **caractérisé en ce que** la fréquence des signaux d'attaque et le cycle de fonctionnement du deuxième transistor de commutation de puissance et du troisième transistor de commutation de puissance sont réglés par un processeur de signal numérique.

7. Dispositif de source de puissance impulsionnelle hybride à fréquence ultrasonore pour le soudage GMAW selon l'une quelconque des revendications 3 à 6, **caractérisé en ce qu'**un courant de sortie total (I_{D}) du dispositif de source de puissance de soudage est une superposition du premier courant de sortie (I_{A}) et du second courant de sortie (I_{C}) qui est un courant sorti par la deuxième diode (D₂).

8. Dispositif de source de puissance impulsionnelle hybride à fréquence ultrasonore pour le soudage GMAW selon l'une quelconque des revendications 1 à 7, **caractérisé en ce qu'**il comprend en outre un premier condensateur (C₁) et un deuxième condensateur (C₂), dans lequel le premier condensateur (C₁) est un condensateur électrolytique, le deuxième condensateur (C₂) est un condensateur à haute fréquence, et le premier condensateur (C₁) et le deuxième condensateur (C₂) sont en liaison parallèle avec l'extrémité de sortie de la source de tension constante (1).

9. Dispositif de source de puissance impulsionnelle hybride à fréquence ultrasonore pour le soudage GMAW selon l'une quelconque des revendications 4 à 8, **caractérisé en ce qu'**il comprend en outre un quatrième condensateur (C₄) et une quatrième diode (D₄), dans lequel une extrémité particulière du quatrième condensateur (C₄) est reliée à la borne négative de la source de courant constant (3), l'autre extrémité du quatrième condensateur (C₄) est reliée à la cathode de la quatrième diode (D₄), l'anode de la quatrième diode (D₄) est reliée à la borne négative de la source de tension constante (1), et la cathode de la quatrième diode (D₄) est également reliée à la cathode de la troisième diode (D₃).
